# EUROPEAN PATENT SPECIFICATION

(11) **EP 4 486 636 B1**
(45) Date of publication and mention of the grant of the patent: **06.05.2026**
(21) Application number: 23712602.4
(22) Date of filing: 03.03.2023
(51) Int. Cl.: B62J 27/00, B62J 45/40, B62J 50/22

(54) **MOTORCYCLE WITH RADAR DEVICE**
MOTORRAD MIT RADARGERÄT
MOTOCYCLETTE AVEC RADAR

(30) Priority: 04.03.2022 IT 202200004169
(43) Date of publication of application: 08.01.2025
(73) Proprietor: Piaggio & C. S.P.A., 56025 Pontedera Pisa (IT)
(72) Inventor: FERRARO, Vincenzo, 56025 Pontedera (PI) (IT)
(74) Representative: Mannucci, Michele
(86) International application number: PCT/IB2023/051986
(87) International publication number: WO 2023/166475

(56) References cited:
- EP-A2- 1 647 447
- WO-A1-2020/041191
- WO-A1-2022/018746
- US-A1- 2018 326 906
- US-A1- 2020 407 001
- US-A1- 2020 407 003
- US-B1- 9 153 133

## Description

### TECHNICAL FIELD

The present invention falls within the production of two- or three-wheeled motorcycles. In particular, the invention relates to a motorcycle provided with a radar device that generates an alarm displayed directly on a monitor installed on the dashboard of the motorcycle.

### STATE OF THE ART

Two- and three-wheeled motorcycles are known to use radar devices to detect the presence of vehicles in the vicinity and thus to limit the risk of possible collisions. In most cases, two devices are used, one for each longitudinal side of the motorcycle. Specifically, each device is installed at a rear-view mirror and is typically configured to detect the presence of a vehicle in a zone corresponding to the blind spot, i.e., in a zone adjacent to the motorcycle that is not within the field of vision permitted by the rear-view mirror. Each of these devices is typically connected to warning lights that are also installed at the rear-view mirror. For each mirror, these lights are activated/illuminated when the radar device detects the presence of a vehicle in the blind spot corresponding to the mirror. These lights therefore provide a visual warning to the driver, who becomes aware that any lateral movement of the motorcycle, e.g. a lane change, could lead to a collision with the vehicle being signaled.

The Applicant has found that the visual alarm offered by the warning lights required the driver to turn their eyes towards the rear-view mirrors, thus diverting their attention, even if for brief moments, from the road. This condition could be dangerous, especially when riding on a busy road. In the case of a motorcycle, i.e., a vehicle without a protective frame around the driver, any distraction, however slight, can be fatal.

The document US 2020/407001 discloses a relevant state of the art motorcycle comprising: a dashboard provided with a monitor; a sonar device configured to detect, for each side of said motorcycle), the presence of a vehicle near or approaching in at least a first zone characteristic of its blind spot; wherein said sonar device comprises at least one sensor and at least one controller that determines the presence of said vehicle in one of said zones based on a signal sent by said sensor element, wherein said controller is connected, directly or indirectly, to said monitor and determines the illumination of at least one predetermined portion of said monitor when it detects the presence of said vehicle in one of said zones.

### SUMMARY

The primary aim of the present invention is to provide a motorcycle which solves or at least mitigates the above-mentioned drawbacks. Within this aim, a first object of the present invention is to provide a saddle-ride motorcycle which warns the driver about the presence of vehicles near or approaching the motorcycle, without diverting their attention from driving. Another object is to provide a motorcycle that is reliable and easy to manufacture at a competitive cost.

The Applicant has found that the above aim and objects can be achieved by the use of a radar device which, following the detection of a vehicle in the vicinity of the motorcycle, directly or indirectly illuminates a portion of a monitor installed on the dashboard of the motorcycle. The central position of the dashboard, and thus of the monitor, thus provides a visual alarm which can be seen by the driver without turning their eyes towards the mirrors, i.e., turning their eyes away from the roadway.

In particular, the aim and the intended objects are achieved by means of a motorcycle comprising a dashboard provided with a monitor and a radar device configured to detect, for each side of the motorcycle, the presence of a vehicle nearby or approaching in at least a first zone characteristic of its blind spot and in at least a second zone adjacent to and rear to the first zone with respect to the advance direction of the motorcycle. Said radar device comprises at least one sensor and at least one controller that determines the presence of the vehicle in one of said zones based on a signal sent by the sensor element.

According to the invention, the controller is connected, directly or indirectly, to the monitor and determines the illumination of at least one predetermined portion of the monitor when it detects the presence of the vehicle in one of the controlled zones. Further, the controller estimates the potential presence of a vehicle in a third zone adjacent to and in front of the first zone with respect to the advance direction of the motorcycle, wherein the controller, based on the speed of the vehicle, determines, directly or indirectly, the illumination of said predetermined portion or of a further predetermined portion of said monitor with respect to said predetermined portion.

Preferably, the speed of the vehicle is measured at the limit closest to the motorcycle in the first zone.

According to one possible embodiment, the controller is connected directly to the monitor and directly determines the illumination of said at least one predetermined portion of the monitor following the presence of the vehicle in one of said zones.

According to an alternative embodiment, the motorcycle comprises a monitor control unit and a communication bus connecting the controller to the control unit. Said communication bus transfers to the control unit an alarm signal generated by the controller and characteristic of the presence of the vehicle in one of the zones, wherein the control unit controls the illumination of said at least one predetermined portion of the monitor based on said alarm signal.

In accordance with an embodiment, at least one left portion of the monitor is illuminated when the presence of a vehicle is detected in the first zone or the second zone, where said zones are considered to be on a left side of the motorcycle. Furthermore, at least one right portion of the monitor is illuminated when the presence of a vehicle is detected in the first zone or the second zone, where said zones are considered to be on a right side of the motorcycle.

In a possible embodiment, the illumination of said at least one predetermined portion of the monitor is fixed. In an alternative embodiment, the illumination of said at least one predetermined portion of the monitor is intermittent.

According to a possible embodiment, said at least one predetermined portion of the monitor is illuminated with a first color when the radar device detects the presence of a vehicle in the first zone and with a second color, different from the first, when said radar device detects the presence of a vehicle in the second zone.

According to an embodiment, depending on the distance of the vehicle from said motorcycle, the controller varies the illuminating surface, color and/or intermittence of said at least a predetermined portion of the monitor.

According to an embodiment, the sensor element is positioned on a centerline plane of the motorcycle and at the rear end thereof, preferably near a taillight.

According to a preferred embodiment, the predetermined portion of the monitor intended to inform the driver of a risk of possible collision is arranged adjacent to the edge of the monitor, so as to leave the view of the other on-board instruments unobstructed and not interfere graphically and visually with them.

### LIST OF FIGURES

Further features and advantages of the invention will become more apparent from examination of the following detailed description of certain preferred, but not exclusive, embodiments of a motorcycle, illustrated by way of non-limiting example, with the support of the accompanying drawings, wherein:
- Fig. 1 is a diagram relating to the operation of a radar device of a motorcycle according to the present invention;
- Figs. 2 and 3 are diagrams relating, respectively, to a first and a second embodiment of a group of components according to the present invention;
- Figs. 4 and 5 are diagrams of possible ways of illuminating a monitor of a dashboard of a motorcycle according to the present invention.

The same numbers and reference letters in the figures identify the same elements or components.

### DETAILED DESCRIPTION

With reference to the above-mentioned figures, the present invention therefore relates to a saddle-ride vehicle, this expression meaning any motorcycle or moped having at least two wheels, i.e., at least one rear wheel and one front wheel. Three-wheeled motorcycles having two steered front wheels and one driven rear wheel or alternatively one steered front wheel and two driven rear wheels are also covered by this definition. In the remainder of the description, the saddle-ride vehicle will be referred to generically as motorcycle 1. In the remainder of the description, reference will also be made to a two-wheeled motorcycle, but the considerations below also apply to a three-wheeled motorcycle, in particular to a three-wheeled device provided with two steered and tilting front wheels and one driven rear wheel.

The motorcycle 1 according to the invention comprises a frame supporting, via a rear suspension, at least one driven wheel. Instead, the at least one front wheel is pivotably connected to a front portion of the frame via a steering column. A dashboard 12 including a monitor 13 preferably, but not exclusively, with LED technology, is mounted on the steering column.

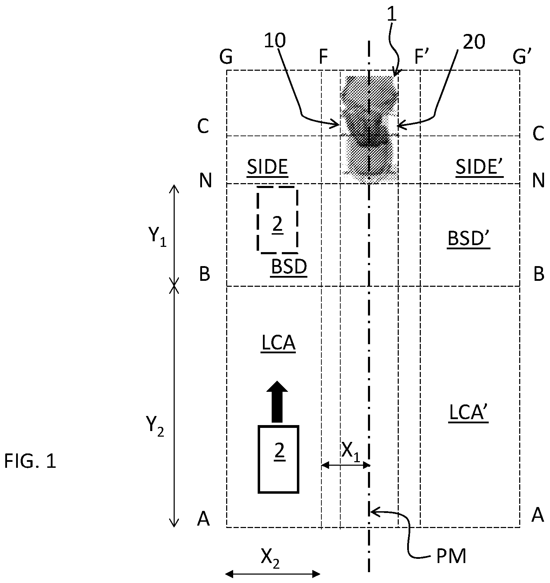

According to the invention, the motorcycle 1 comprises a radar device 16 configured to detect, for each longitudinal side 10, 20 of the motorcycle 1 the presence of a target vehicle 2 near or approaching the motorcycle 1. In particular, the radar device 16 is configured to detect, for each side 10, 20, the presence of a target vehicle in a first zone BSD, BSD' (characteristic of the blind spot of the motorcycle 1) and in a second zone LCA, LCB', adjacent to and rear to the first zone BSD, BSD. The term *"rear to"* is intended to indicate that the second zone LCA, LCA' develops from the first zone BSD, BSD' in a direction opposite to the advance direction of the motorcycle 1 (Fig. 1).

For the purposes of the invention, a left longitudinal side 10 (or left side 10) and a right longitudinal side 20 (or right side 20) are identified with respect to a longitudinal centerline plane PM, where the terms *"right"* and *"left"* correspond respectively to the *"right"* and *"left"* of a driver sitting on the saddle of the motorcycle in a riding position.

For the purposes of the invention, the term *"target vehicle* 2" or *"vehicle* 2" is intended to indicate a generic three- or four-wheeled motor vehicle (car, truck, etc.) or a generic two- or three-wheeled motorcycle detectable by the radar device 16.

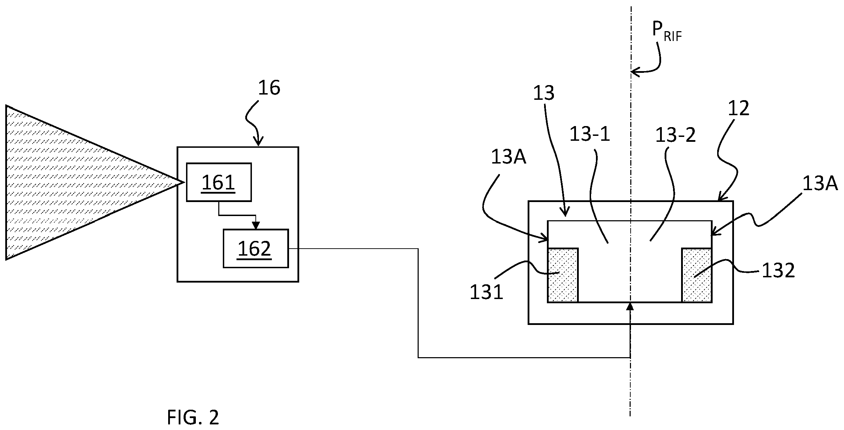

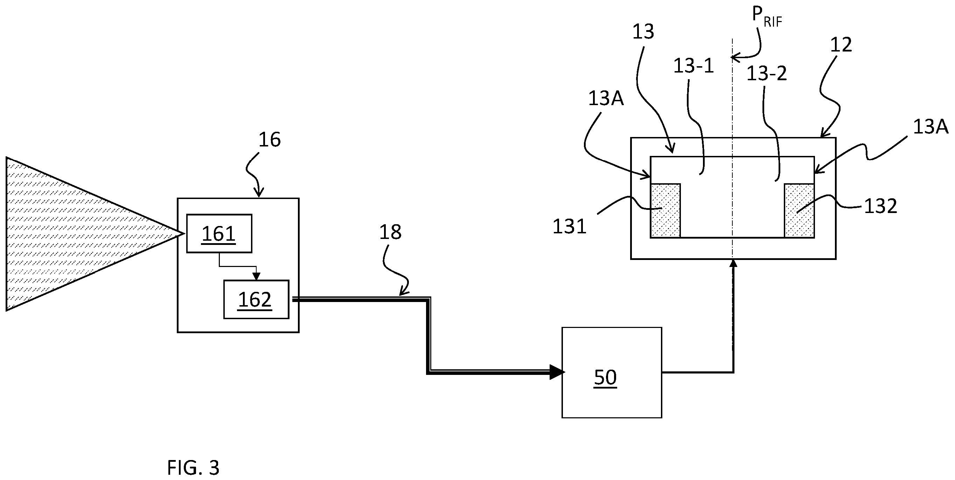

The radar device 16 comprises at least one sensor 161 and at least one controller 162 (Fig. 2) which, based on what is detected by the sensor 161, determines the presence of the target vehicle 2 in the monitored zones BSD, BSD', LCA, LCA' defined above. According to the invention, the controller 162 is connected, directly or indirectly, to the monitor 13 so as to determine the illumination of at least one predetermined portion 131, 131', 132, 132' thereof when the controller 162 determines, for at least one of the two sides 10, 20 of the motorcycle 1, the presence of the target vehicle 2 in one of the two monitored zones BSD, BSD', LCA, LCA'. The illumination of said at least one predetermined portion 131, 131', 132, 132' constitutes an alarm for the driver in that it warns them of the presence in the *"blind"* zone (first zone BSD, BSD') and/or of the approach of a target vehicle (second zone LCA, LCA'). In substance, the illumination of the predetermined portion 131, 131', 132, 132' constitutes a visual warning to the driver of the presence of a target vehicle 2 that could collide with the motorcycle 1 if, for example, the driver decides to change lane. Preferably, the predetermined portion 131, 131', 132, 132' of the monitor 13 intended to inform the driver of a risk of possible collision is arranged adjacent to the edge (indicated with 13A in Figs. 2 and 3) of the monitor itself, so as to leave the view of the other on-board instruments unobstructed and not interfere graphically and visually therewith.

Fig. 1 schematically shows a motorcycle 1 in which, in accordance with a preferred embodiment, the radar device 16 is installed in the rear end of the motorcycle 1, preferably on the longitudinal centerline plane PM, even more preferably near a taillight. The controller 162 of the radar device 16 identifies, for each longitudinal side 10, 20 of the motorcycle 1, the two monitoring zones BSD, BSD', LCA, LCA' within a grid identified by reference lines parallel and perpendicular to the centerline plane PM.

In particular, for each side (right and left) of motorcycle 1, the controller 162 considers a first longitudinal line F, F' and a second longitudinal line G, G' parallel to the longitudinal centerline plane PM. The first longitudinal line F, F' is considered to be at a lateral distance X₁ from the longitudinal centerline plane PM of the motorcycle 1. The second longitudinal line G, G' is considered to be at a lateral distance X₂ from the first longitudinal line F, F' located on the same side.

The controller 162 considers a first reference transverse line C crossing the seat at the position where the driver sits, a second transverse line N tangent to motorcycle 1 at the position where radar device 16 is located, a third transverse line B at a first distance Y₁ from the second transverse line N and a fourth transverse line A at a second distance Y₂ from the third transverse line B.

In accordance with a preferred embodiment of the invention, for each side (right and left) of the motorcycle 1, the controller 162, following receipt of a signal from the sensor element 161, determines the presence of a target vehicle in the zone BSD, BSD' when it is identified between the two transverse lines B and N and between the two longitudinal lines FG-F'G'. The controller 162 determines the presence of a vehicle in the zone LCA, LCA' if it is detected in a position rear to the transverse line B, between the two longitudinal lines FG-F'G' and when the time until the potential collision with the motorcycle 1 is estimated to be less than a predetermined value (e.g., less than 2 seconds).

In accordance with a preferred embodiment, the sensor element 161 is configured to scan a conical space defined by a horizontal angle between 150° and 170° and a vertical angle between 60° and 70°.

According to the invention, the controller 162 considers, for each side 10, 20 of the motorcycle 1, a third zone SIDE, SIDE' included between the first transverse line C, the second transverse line N and the two longitudinal lines FG-F'G'. The third zone SIDE, SIDE' is therefore adjacent to the first zone BSD, BSD' and extends in front of this zone, according to the direction of travel of the motorcycle 1. The controller 162 predicts the presence of a target vehicle 2 in the third zone SIDE, SIDE' according to the speed thereof detected while crossing the first zone BSD, BSD'. As a result of this prediction, the controller 162 determines, directly or indirectly, the illumination of a portion 131, 131', 132, 132' of the monitor 13.

Preferably, the controller 162 evaluates the speed difference existing between the target vehicle 2 and the motorcycle 1 as the target vehicle 2 crosses the first zone BSD, BSD'. If at the end of the first zone BSD, BSD' (i.e., when the target vehicle 2 is substantially at the second transverse line N-N) said speed difference is greater than a predetermined value, then the controller 162 determines, directly or indirectly, the illumination of said portion 131, 131', 132, 132' of the monitor 13. Indeed, in such condition (vehicle 2 indicated with a dashed line in Fig. 1) the controller 162 estimates the immediate entry of the target vehicle 2 into the third zone SIDE, SIDE'. If, on the contrary, such difference in speed is characteristic of a slowing down of the target vehicle 2, then the controller 162 does not generate any visual alarm indicating entry into the third zone SIDE, SIDE'.

Fig. 2 is a schematic view referring to a first embodiment of the invention whereby the controller 162 is directly connected to the monitor 13 and directly determines the illumination of a portion 131, 131', 132, 132' of the monitor 13. In this embodiment, there is thus provided a direct connection (e.g. via cable) between the controller 162 and the monitor 13 whereby an electrical signal S1 generated by the controller 162 determines the illumination of a portion 131, 131', 132, 132' of the monitor 13.

Again with reference to Fig. 2, a left half 13-1 and a right half 13-2 symmetrical with respect to a reference plane P_{RIF} are identified for the monitor 13. Preferably, the controller 162 determines the illumination of at least one portion 131 of the left half 13-1 of the monitor 13 when the presence of a vehicle is detected in the first zone BSD or in the second zone LCA relating to the left side 10 of the motorcycle 1. In contrast, the controller 162 determines the illumination of at least one portion 132 of the right half 13-2 of the monitor 13 when the presence of a target vehicle is detected in the first zone BSD' 'or in the second zone LCA' relating to the right side 20 of the motorcycle 1.

Fig. 3 schematically shows a second embodiment of the invention in which the controller 162 is indirectly connected to the monitor 13 via a control unit 50 of the monitor. In this embodiment, a communication bus 18 is provided which transfers to the control unit 50 an alarm signal generated by the controller 162, where such is characteristic of the presence of a vehicle in one of the zones BSD, BSD', LCA, LCA' monitored by the radar device 16. The control unit 50 processes the received alarm signal and controls the illumination of a portion 131, 131', 132, 132' of the monitor 13.

Preferably, the control unit 50 controls the illumination of at least one portion 131 of the left half 13-1 of the monitor 13 when the alarm signal generated by the controller 162 is characteristic of the presence of a target vehicle in one of the zones BSD, LCA monitored for the left side 10 of the motorcycle 1. The control unit 50 controls the illumination of at least one portion 132 of the right half 13-2 of the monitor 13 when the alarm signal generated by the controller 162 is characteristic of the presence of a target vehicle in one of the zones BSD', LCA' monitored for the right side 20 of the motorcycle 1.

Various modes of implementation of the visual alarm, i.e., different modes of illuminating the monitor 13, are described below. In particular, each of the described modes may be implemented regardless of whether the controller 162 determines, directly or indirectly, illumination of one or more portions 131, 131', 132, 132' of the monitor 13. Such modes of implementation will be described with reference to the left half 13-1 of the monitor 13 wherein the one or more predetermined portions 131, 131' are illuminated when the controller 162 determines or predicts the presence of a vehicle in one of the zones BSD, LCA, SIDE relating to the left side 10 of the motorcycle 1. However, the following considerations are also valid for the right half 13-2 of the monitor 13, i.e., with reference to the zones BSD', LCA', SIDE' relating to the right side 20 of the motorcycle 1.

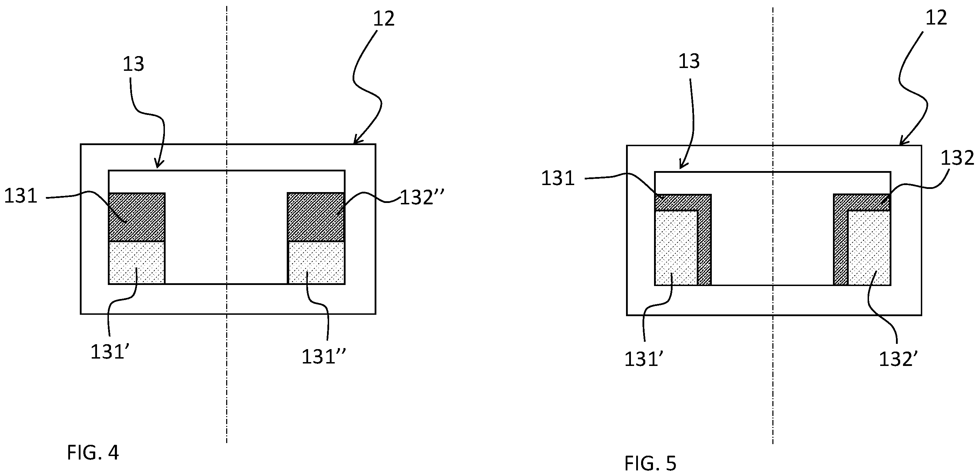

With reference to Figs. 4 and 5, in a possible mode of implementation, the controller 162 determines the illumination of at least two predetermined portions 131, 131' of the left half 13-1 of the monitor 13 each for a corresponding monitored zone BSD, LCA of the left side 10. As schematized in Fig. 4, such portions 131, 131' could be differentiated with an equal or different extension. Alternatively, the portions 131, 131' could be partially overlapping with a different extension, as is instead schematized in Fig. 5. In this second case, for example, a first portion 131 could have a greater extension and be illuminated in the case in which the target vehicle 2 is detected in the zone BSD, closer to the motorcycle 1. A second portion 131', lesser extension could be illuminated when the target vehicle 2 is detected in the second monitored zone LCA. In this hypothesis, during normal travel of the motorcycle 1, the radar device 16 may first detect a target vehicle 2 approaching the motorcycle 1 in the second zone LCA and therefore the controller 162 will determine the illumination of the second portion 131'. Subsequently, as soon as the target vehicle 2 enters the first zone BSD, the controller 162 will determine the illumination of the first portion 131 whose greater extension will provide an even more apparent visual warning to the driver.

In a possible mode of implementation, the illumination of the predetermined portion(s) 131, 131' may be fixed or alternatively intermittent. For example, the illumination may be intermittent when the target vehicle 2 is detected in the zone LCA, i.e., when it is further away from the motorcycle 1. Continuing the example, the illumination may be continuous when the target vehicle 2 is detected entering the blind zone (first zone BSD), i.e., when it is closer to motorcycle 1 and/or when the target vehicle 2 is detected in the third zone SIDE.

In another possible mode of implementation, the illumination could still be intermittent, but with a variable frequency depending on the zone LCA, BSD, SIDE in which the target vehicle 2 is detected.

In a possible mode of implementation, which can be combined with the previous mode, the predetermined portion 131, 131' of the monitor 13 is illuminated in a predetermined color depending on the zone BSD, LCA, SIDE in which the target vehicle 2 is detected or predicted. In other words, for each monitored zone BSD, LCA, SIDE, a specific illumination color may be provided; for the first zone BSD and the third zone SIDE, for example, a red color could be provided, as it is characteristic of the increased danger resulting from the close proximity of the target vehicle 2 to the motorcycle 1.

In a further mode of implementation, the illumination of the predetermined portion(s) 131, 131', 132, 132' may be instantaneous or gradual, again depending on the monitored zone in which the controller 162 determines the presence of a target vehicle 2. The term *"instantaneous"* is intended to indicate a condition whereby the entire zone of the predetermined portion 131, 131', 132, 132' is illuminated at the same instant. The term *"gradual",* on the other hand, denotes a condition whereby the zone of the portion is gradually illuminated from a zero value up to its entirety. When the target vehicle 2, for example, is detected in the first zone BSD or when the controller 162 expects it to be in the third zone SIDE, the illumination of the predetermined portion(s) 131, 131', 132, 132' could be instantaneous. In a possible variant, when the controller162 determines the presence of a target vehicle 2 in the second zone LCA then the illumination of the predetermined portion(s) 131, 131', 132, 132' could be gradual and, i.e., increase as the target vehicle 2 approaches the first zone BSD.

The motorcycle 1 according to the invention allows the intended aims and objects to be fully achieved. In particular, the radar device provides visual alarms that are immediately perceived by the driver without taking their eyes off the road.

## Claims

1. A saddle-ride type motorcycle (1) comprising:
- a dashboard (12) provided with a monitor (13);
- a radar device (16) configured to detect, for each side of said motorcycle (1), the presence of a vehicle (2) near or approaching in at least a first zone (BSD, BSD') characteristic of its blind spot and in at least a second zone (LCA, LCA') adjacent to and rear to said first zone (BSD, BSD') with respect to the advance direction of said motorcycle (1), wherein said radar device (16) comprises at least one sensor (161) and at least one controller (162) that determines the presence of said vehicle (2) in one of said zones (BSD, BSD, LCA, LCA') based on a signal sent by said sensor element (161),
wherein said controller (162) is connected, directly or indirectly, to said monitor (13) and determines the illumination of at least one predetermined portion (131, 131', 132, 132') of said monitor (13) when it detects the presence of said vehicle (2) in one of said zones (BSD, BSD', LCA, LCA'), wherein said controller (162) estimates the potential presence of said vehicle (2) in a third zone (SIDE) adjacent to and in front of said first zone (BSD, BSD') with respect to the direction of travel of said motorcycle (1), wherein said controller (162), based on the speed (V) of said vehicle (2), determines, directly or indirectly, the illumination of said predetermined portion (131, 131', 132, 132') or of a further predetermined portion of said monitor (13) with respect to said predetermined portion (131, 131', 132, 132').

2. Motorcycle (1) according to claim 1, wherein said speed of said vehicle (2) is detected at the entry thereof into said third zone (SIDE).

3. Motorcycle (1) according to any one of claims 1 or 2, wherein said controller (162) is directly connected to said monitor (13) and directly determines the illumination of said at least one predetermined portion (131, 131', 132, 132') of said monitor (13) as a result of the presence of said vehicle (2) in one of said zones (BSD, LCA, SIDE).

4. Motorcycle (1) according to any one of claims 1 or 2, wherein said motorcycle (1) comprises a control unit (50) of said monitor (13) and a communication bus (18) connecting said controller (162) to said control unit (50), said communication bus (18) transferring to said control unit (50) an alarm signal generated by said controller (162) and characteristic of the presence of said vehicle (2) in one of said zones (BSD, LCA), wherein said control unit (50) controls the illumination of said at least one portion of said monitor (13) based on said alarm signal (S).

5. Motorcycle (1) according to any one of claims 1 to 4, wherein:
- at least one left portion (131, 131') of said monitor (13) is illuminated when the presence of said vehicle (2) is detected in said first zone (BSD) or in said second zone (LCA), wherein said zones (BSD, LCA) are considered to be on a left side (20) of said motorcycle (1), and wherein
- at least one right portion (132, 132') of said monitor (13) is illuminated when the presence of said vehicle (2) is detected in said first zone (BSD') or in said second zone (LCA'), wherein said zones (BSD', LCA') are considered to be on a right side (20) of said motorcycle (1).

6. Motorcycle (1) according to claim 5, wherein the illumination of said at least one predetermined portion (131, 131', 132, 132') of said monitor (13) is fixed or is intermittent.

7. Motorcycle (1) according to claim 5 or 6, wherein said at least one predetermined portion (131, 131', 132, 132') of said monitor (13) is illuminated with a first color when said radar device (16) detects the presence of said vehicle (2) in said first zone (BSD, BSD') and with a second color, different from the first color, when said radar device (16) detects the presence of said vehicle (2) in said second zone (LCA, LCA').

8. Motorcycle (1) according to claim 7, wherein depending on the distance of said vehicle (2) from said motorcycle (1), said controller (162) varies the illuminating surface, the color and/or the intermittence of said at least one predetermined portion (131, 131', 132, 132') of said monitor (13).

9. Motorcycle (1) according to any one of the preceding claims, wherein said sensor element (161) is positioned on a centerline plane (M) of the motorcycle (1) and at the rear end thereof, preferably near a taillight.

10. Motorcycle (1) according to any one of the preceding claims, wherein said predetermined portion (131, 131', 132, 132') of said monitor (13) is arranged adjacent to the edge of said monitor (13).

## Patentansprüche

1. Motorrad (1) mit Sattel, umfassend:
- ein Armaturenbrett (12) mit einem Monitor (13);
- - eine Radareinrichtung (16), die so eingerichtet ist, dass sie für jede Seite des Motorrads (1) das Vorhandensein eines Fahrzeugs (2) in der Nähe oder sich nähernd in mindestens einer ersten Zone (BSD, BSD'), die für seinen toten Winkel charakteristisch ist, und in mindestens einer zweiten Zone (LCA, LCA') in der Nähe und hinter der ersten Zone (BSD, BSD') in Bezug auf die Vorwärtsrichtung des Motorrads (1) zu erkennen, wobei die Radareinrichtung (16) mindestens einen Sensor (161) und mindestens eine Steuereinheit (162) umfasst, die das Vorhandensein des Fahrzeugs (2) in einer der Zonen (BSD, BSD, LCA, LCA') auf der Grundlage eines von dem Sensorelement (161) gesendeten Signals,
wobei die Steuereinheit (162) direkt oder indirekt mit dem Monitor (13) verbunden ist und die Beleuchtung mindestens eines vorbestimmten Abschnitts (131, 131', 132, 132') des Monitors (13) bestimmt, wenn sie die Anwesenheit des Fahrzeugs (2) in einer der Zonen (BSD, BSD', LCA, LCA') feststellt, wobei die Steuereinheit (162) die potenzielle Anwesenheit des Fahrzeugs (2) in einer dritten Zone (SIDE) neben und vor der ersten Zone (BSD, BSD') in Bezug auf die Fahrtrichtung des Motorrads (1) abschätzt, wobei die Steuereinheit (162) auf der Grundlage der Geschwindigkeit (V) des Vehikels (2) direkt oder indirekt die Beleuchtung des vorbestimmten Abschnitts (131, 131', 132, 132') oder eines weiteren vorbestimmten Abschnitts des Monitors (13) in Bezug auf den vorbestimmten Abschnitt (131, 131', 132, 132') bestimmt.

2. Motorrad (1) gemäß Anspruch 1, wobei die Geschwindigkeit des Fahrzeugs (2) bei dessen Einfahrt in die dritte Zone (SIDE) erfasst wird.

3. Motorrad (1) gemäß Anspruch 1 oder 2, wobei die Steuereinheit (162) direkt mit dem Monitor (13) verbunden ist und die Beleuchtung des mindestens einen vorbestimmten Abschnitts (131, 131', 132, 132') des Monitors (13) als Ergebnis der Anwesenheit des Fahrzeugs (2) in einer der Zonen (BSD, LCA, SIDE) bestimmt.

4. Motorrad (1) gemäß Anspruch 1 oder 2, wobei das Motorrad (1) eine Steuereinheit (50) des Monitors (13) und einen Kommunikationsbus (18) umfasst, der die Steuereinheit (162) mit der Steuereinheit (50) verbindet, wobei der Kommunikationsbus (18) ein von der Steuereinheit (162) erzeugtes Alarmsignal, das für das Vorhandensein des Fahrzeugs (2) in einer der Zonen (BSD, LCA, SIDE) charakteristisch ist, an die Steuereinheit (50) überträgt , das von der Steuereinheit (162) erzeugt wird und das Vorhandensein des Fahrzeugs (2) in einer der Zonen (BSD, LCA) anzeigt, wobei die Steuereinheit (50) die Beleuchtung des mindestens einen Abschnitts des Monitors (13) auf der Grundlage des Alarmsignals (S) steuert.

5. Motorrad (1) gemäß einem der Ansprüche 1 bis 4, wobei:
- mindestens ein linker Abschnitt (131, 131') des Monitors (13) beleuchtet wird, wenn das Vorhandensein des Fahrzeugs (2) in der ersten Zone (BSD) oder in der zweiten Zone (LCA) erkannt wird, wobei die Zonen (BSD, LCA) als auf einer linken Seite (20) des Motorrads (1) liegend betrachtet werden, und wobei
- mindestens ein rechter Abschnitt (132, 132') des Monitors (13) beleuchtet wird, wenn das Vorhandensein des Fahrzeugs (2) in der ersten Zone (BSD') oder in der zweiten Zone (LCA') erkannt wird, wobei die Zonen (BSD', LCA') als auf der rechten Seite (20) des Motorrads (1) liegend betrachtet werden.

6. Motorrad (1) gemäß Anspruch 5, wobei die Beleuchtung des mindestens einen vorbestimmten Abschnitts (131, 131', 132, 132') des Monitors (13) konstant oder intermittierend ist.

7. Motorrad (1) gemäß Anspruch 5 oder 6, wobei der mindestens eine vorbestimmte Abschnitt (131, 131', 132, 132') des Monitors (13) mit einer ersten Farbe beleuchtet wird, wenn die Radareinrichtung (16) die Anwesenheit des Fahrzeugs (2) in der ersten Zone (BSD, BSD') erfasst, und mit einer zweiten Farbe, die sich von der ersten Farbe unterscheidet, wenn die Radareinrichtung (16) die Anwesenheit des Fahrzeugs (2) in der zweiten Zone (LCA, LCA') erfasst.

8. Motorrad (1) gemäß Anspruch 7, wobei die Steuereinheit (162) in Abhängigkeit vom Abstand des Fahrzeugs (2) zum Motorrad (1) die Leuchtfläche, die Farbe und/oder die Blinkfrequenz des mindestens einen vorbestimmten Abschnitts (131, 131', 132, 132') des Monitors (13) variiert.

9. Motorrad (1) gemäß einem der vorangegangenen Ansprüche, wobei das Sensorelement (161) auf einer Mittellinie (M) des Motorrads (1) und an dessen hinterem Ende, vorzugsweise in der Nähe eines Rücklichts, positioniert ist.

10. Motorrad (1) gemäß einem der vorangegangenen Ansprüche, wobei der vorbestimmte Abschnitt (131, 131', 132, 132') des Monitors (13) benachbart zum Rand des Monitors (13) angeordnet ist.

## Revendications

1. Une motocyclette du type à selle (1) comprenant :
- un tableau de bord (12) pourvu d'un moniteur (13) ;
- un dispositif radar (16) configuré pour détecter, de chaque côté de ladite motocyclette (1), la présence d'un véhicule (2) à proximité ou approchant dans au moins une première zone (BSD, BSD') caractéristique de son angle mort et dans au moins une deuxième zone (LCA, LCA') adjacente à et à l'arrière de ladite première zone (BSD, BSD') par rapport à la direction d'avancement de ladite motocyclette (1), ledit dispositif radar (16) comprenant au moins un détecteur (161) et au moins un contrôleur (162) qui détermine la présence dudit véhicule (2) dans l'une desdites zones (BSD, BSD, LCA, LCA') sur la base d'un signal envoyé par ledit élément détecteur (161),
ledit contrôleur (162) étant connecté, directement ou indirectement, audit monitor (13) et déterminant l'éclairage d'au moins une partie prédéterminée (131, 131', 132, 132') dudit moniteur (13) lorsqu'il détecte la présence dudit véhicule (2) dans l'une desdites zones (BSD, BSD', LCA, LCA'), ledit contrôleur (162) estimant la présence potentielle dudit véhicule (2) dans une troisième zone (SIDE) adjacente à et en face de ladite première zone (BSD, BSD') par rapport à la direction de déplacement de ladite motocyclette (1), ledit contrôleur (162), sur la base de la vitesse (V) dudit véhicule (2), déterminant, directement ou indirectement, l'éclairage de ladite partie prédéterminée (131, 131', 132, 132') ou un partie supplémentaire prédéterminée dudit moniteur (13) par rapport à ladite partie prédéterminée (131, 131', 132, 132').

2. Motocyclette (1) selon la revendication 1, dans laquelle ladite vitesse dudit véhicule (2) est détectée lors de son entrée dans ladite troisième zone (SIDE).

3. Motocyclette (1) selon l'une quelconque des revendications 1 ou 2, dans laquelle ledit contrôleur (162) est directement connecté audit moniteur (13) et détermine directement l'éclairage de ladite ou desdites partie(s) prédéterminée(s) (131, 131', 132, 132') dudit moniteur (13) en tant que conséquence de la présence dudit véhicule (2) dans l'une desdites zones (BSD, LCA, SIDE).

4. Motocyclette (1) selon l'une quelconque des revendications 1 ou 2, dans laquelle ladite motocyclette (1) comprend une unité de commande (50) dudit moniteur (13) et un bus de communication (18) connectant ledit contrôleur (162) à ladite unité de commande (50), ledit bus de communication (18) transférant à ladite unité de commande (50) un signal d'alarme généré par ledit contrôleur (162) et caractéristique de la présence dudit véhicule (2) dans l'une desdites zones (BSD, LCA), ladite unité de commande (50) commandant l'éclairage de ladite ou desdites partie(s) dudit moniteur (13) sur la base dudit signal d'alarme (S).

5. Motocyclette (1) selon l'une quelconque des revendications 1 à 4, dans laquelle :
- au moins une partie gauche (131, 131') dudit moniteur (13) est éclairée lorsque la présence dudit véhicule (2) est détectée dans ladite première zone (BSD) ou dans ladite deuxième zone (LCA), lesdites zones (BSD, LCA) étant considérées comme étant sur un côté gauche (20) de ladite motocyclette (1), et dans laquelle
- au point une partie droite (132, 132') dudit moniteur (13) est éclairée lorsque la présence dudit véhicule (2) est détectée dans ladite première zone (BSD') ou dans ladite deuxième zone (LCA'), lesdites zones (BSD', LCA') étant considérées comme étant sur un côté droit (20) de ladite motocyclette (1).

6. Motocyclette (1) selon la revendication 5, dans laquelle l'éclairage de ladite ou desdites partie(s) prédéterminée(s) (131, 131', 132, 132') dudit moniteur (13) est fixe ou intermittente.

7. Motocyclette (1) selon la revendication 5 ou 6, dans laquelle ladite ou lesdites partie(s) prédéterminée(s) (131, 131', 132, 132') dudit moniteur (13) est/sont éclairée(s) avec une première couleur lorsque ledit dispositif radar (16) détecte la présence dudit véhicule (2) dans ladite première zone (BSD, BSD') et avec une deuxième couleur, différente de la première couleur, lorsque ledit dispositif radar (16) détecte la présence dudit véhicule (2) dans ladite deuxième zone (LCA, LCA').

8. Motocyclette (1) selon la revendication 7, lorsque celle-ci dépend de la distance dudit véhicule (2) par rapport à ladite motocyclette (1), ledit contrôleur (162) faisant varier la surface éclairée, la couleur et/ou l'intermittence de ladite ou lesdites partie(s) prédéterminée(s) (131, 131', 132, 132') dudit moniteur (13).

9. Motocyclette (1) selon l'une quelconque des revendications précédentes, dans laquelle ledit élément détecteur (161) est positionné sur un plan médian (M) de la motocyclette (1) et à l'extrémité arrière de cette dernière, de préférence à proximité d'un feu arrière.

10. Motocyclette (1) selon l'une quelconque des revendications précédentes, dans laquelle ladite partie prédéterminée (131, 131', 132, 132') dudit moniteur (13) est agencée à proximité du bord dudit moniteur (13).
